# FASCICULE DE BREVET EUROPEEN

(11) **EP 1 731 351 B1**
(45) Date de publication et mention de la délivrance du brevet: **07.03.2012**
(21) Numéro de dépôt: 06300561.5
(22) Date de dépôt: 07.06.2006
(51) Int. Cl.: B60N 2/06, B60N 2/46, B60N 2/30

(54) **Accoudoir central pour sièges latéraux**
Mittlere Armlehne für seitliche Sitze
Central armrest for lateral seats

(30) Priorité: 07.06.2005 FR 0505770
(43) Date de publication de la demande: 13.12.2006
(73) Titulaire: Peugeot Citroën Automobiles SA, 78943 Vélizy-Villacoublay Cedex (FR)
(72) Inventeur: Groen, Ivo, 78670 Medan (FR); Loureiro da Silva, Sergio, 78110 Le Vesinet (FR)

(56) Documents cités:
- EP-A- 0 943 482
- WO-A-03/095263
- DE-U1- 20 000 479
- DE-U1- 20 017 051

## Description

La présente invention est relative à une disposition à trois sièges distincts, de préférence accolés, à dossiers sensiblement verticaux et elle vise à faire en sorte que le siège central de cette disposition puisse se rabattre tout en créant un accoudoir pour les sièges latéraux.

La technique antérieure a fait connaître des véhicules comportant aux places arrière une telle disposition à trois sièges dans laquelle, lorsque le siège central est rabattu et les deux sièges latéraux sont recentrés, les passagers disposent assurément de davantage de place, mais ils n'ont pas à leur disposition un accoudoir confortable.

Une telle réalisation n'assure donc pas un confort optimum pour les passagers arrière.

Le document WO 03/095263 décrit une disposition à trois sièges dans laquelle le siège central peut être replié pour former un accoudoir et les deux sièges latéraux sont recentrés. L'assise du siège central est repliable le long de deux lignes parallèles entre elles et orthogonales au dossier du siège. Le coussin de l'assise comprend ainsi trois zones distinctes séparées par les deux lignes parallèles entre elles : deux zones opposées jouxtant les sièges latéraux et une zone intermédiaire aux deux autres zones. Ainsi, lorsqu'on rapproche les deux sièges latéraux l'un vers l'autre, le coussin du siège central se replie de la façon suivante : les deux zones jouxtant les sièges latéraux se rapprochent l'une de l'autre et la zone intermédiaire monte de façon à permettre à un passager du véhicule d'y poser son bras.

Dans la présente invention, et de manière en soi connue, le dossier du siège milieu se rabat tout en laissant l'assise du siège reposer sur le plancher du véhicule, de sorte que les sièges latéraux peuvent coulisser au-dessus du siège milieu rabattu. Cependant, et c'est là que réside en fait l'invention, le dossier du siège milieu est réalisé en deux parties, à savoir une partie latérale en U inversé entourant une partie centrale, et c'est seulement cette partie latérale qui se rabat sur le siège en laissant la partie centrale du dossier en position sensiblement verticale et qui se déploie ensuite pour faire office d'accoudoir.

L'avantage de la réalisation selon la présente invention est que les passagers des places arrière disposent d'un accoudoir une fois le siège central rabattu et il s'agit d'un accoudoir confortable car il est utilisé sur sa face garnie.

Ainsi, selon la présente invention, le procédé pour constituer un accoudoir pour les sièges latéraux d'une disposition à trois sièges distincts à dossiers sensiblement verticaux, ces sièges étant montés sur un plancher tel que celui d'un véhicule automobile, est caractérisé par les étapes consistant à :
- constituer en deux parties le dossier du siège milieu de la disposition à trois sièges, à savoir une partie centrale et une partie latérale en U inversé, cette partie centrale comprenant elle-même un support relié à l'assise du siège et un capitonnage articulé au support en partie haute de celui-ci,
- déverrouiller et faire pivoter la partie latérale du dossier du siège milieu par rapport à l'assise de ce siège en laissant la partie centrale de son dossier en position sensiblement verticale,
- amener l'ensemble formé de ladite partie latérale et de l'assise du siège milieu à reposer sur ledit plancher en laissant toujours la partie centrale du dossier en position sensiblement verticale.
- faire coulisser les sièges latéraux l'un vers l'autre,
- déverrouiller et faire pivoter le capitonnage de la partie centrale par rapport à son support et le fixer en position sensiblement horizontale afin de constituer ledit accoudoir.

Il est cependant également possible d'inverser les deux dernières opérations de sorte que le coulissement des sièges latéraux sera effectué après la constitution de l'accoudoir.

Conformément à cette variante de réalisation, le procédé pour constituer un accoudoir pour les sièges latéraux d'une disposition à trois sièges distincts à dossiers sensiblement verticaux, ces sièges étant montés sur un plancher, tel que celui d'un véhicule automobile, est caractérisé par les étapes consistant à :
- constituer en deux parties le dossier du siège milieu de la disposition à trois sièges, à savoir une partie centrale et une partie latérale en U inversé, cette partie centrale comprenant elle-même un support relié à l'assise du siège et un capitonnage articulé au support en partie haute de celui-ci,
- déverrouiller et faire pivoter la partie latérale du dossier du siège milieu par rapport à l'assise de ce siège en laissant la partie centrale de son dossier en position sensiblement verticale,
- amener l'ensemble formé de ladite partie latérale et de l'assise du siège milieu à reposer sur ledit plancher en laissant toujours la partie centrale du dossier en position sensiblement verticale,
- déverrouiller et faire pivoter le capitonnage de la partie centrale par rapport à son support et le fixer en position sensiblement horizontale afin de constituer ledit accoudoir,
- faire coulisser les sièges latéraux l'un vers l'autre.

Selon des caractéristiques avantageuses de l'invention :
- lorsqu'on amène l'ensemble formé de ladite partie latérale et de l'assise du siège milieu à reposer sur le plancher, on fait en sorte qu'au moins une portion de la partie supérieure de cet ensemble se trouve à une hauteur inférieure à celle de la partie inférieure des sièges latéraux par rapport à ce plancher et en ce que le coulissement des sièges latéraux l'un vers l'autre se fait au-dessus de ladite portion dudit ensemble,
- le coulissement des sièges latéraux l'un vers l'autre se fait en les rapprochant d'une distance au plus égale à la largeur de la partie centrale du dossier du siège milieu,
- le coulissement des sièges latéraux l'un vers l'autre se fait en les rapprochant d'une distance au plus égale à la largeur du support de la partie centrale du dossier du siège milieu.

L'invention s'étend également à un dispositif pour constituer un accoudoir pour les sièges latéraux d'une disposition à trois sièges distincts à dossiers sensiblement verticaux, ces sièges étant montés sur un plancher, tel que celui d'un véhicule automobile, et les sièges latéraux étant prévus pour coulisser l'un vers l'autre, caractérisé en ce que le dossier du siège milieu est réalisé en deux parties, à savoir une partie centrale et une partie latérale en U inversé, la partie centrale du dossier est fixe par rapport à l'assise de siège et la partie latérale en U inversé du dossier est articulée sur l'assise du siège au moyen d'un axe de rotation horizontal situé en bas du dossier en étant maintenue en position sensiblement verticale à l'aide d'un premier organe de blocage monté débrayable de manière à pouvoir rabattre la partie latérale en U inversé du dossier sur l'assise du siège, le capitonnage de la partie centrale du dossier est elle-même articulée sur son support au moyen d'un axe de rotation horizontal placé à la partie supérieure du support et est maintenue contre le support à l'aide d'un second organe de blocage également débrayable de manière à pouvoir amener le capitonnage en une position sensiblement horizontale.

Selon d'autres caractéristiques avantageuses de l'invention :
- le premier et le second organe de blocage débrayables sont chacun reliés à un organe de déblocage ;
- l'ensemble constitué par l'assise et le dossier du siège milieu est fixé au bâti du siège par un cran d'arrêt ;
- un longeron pivotant est relié d'une part au support du siège et d'autre part à une jambe de force du bâti de ce siège et sur laquelle repose le support de siège, ledit support de siège comprenant en extrémité un organe de maintien qui coopère avec le cran d'arrêt ;
- un organe de déblocage du cran d'arrêt est prévu sur le bâti du siège pour permettre audit ensemble de pivoter autour d'un axe et se poser sur le plancher du véhicule, le bâti restant à sa position initiale ;
- les organes de déblocage sont constitués par au moins une manette à la disposition des passagers des sièges latéraux.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- la figure 1 représente les trois sièges arrière d'un véhicule automobile en position d'assise ;
- la figure 2 est une vue semblable à la figure 1 mais montre la partie latérale en U inversé du dossier du siège milieu rabattu selon la flèche F1 de la figure 1 sur l'assise du siège sans que la partie centrale du dossier ait été elle-même rabattue ;
- la figure 3 est une vue semblable à la figure 2 mais avec l'ensemble du siège milieu qui a été poussé vers le bas selon la flèche F2 de la figure 2 et posé sur le plancher du véhicule, la partie centrale de ce siège restant dans la même position qu'à la figure 2 et les sièges latéraux toujours à la même place qu'aux figures précédentes ;

- la figure 4 montre les sièges latéraux rapprochés de la partie centrale du dossier du siège milieu par coulissement latéral selon les flèches F3-F3 de la figure 3, le capitonnage de cette partie centrale ayant été en outre amené à pivoter selon la flèche F4 de la figure 3 pour l'amener dans une position horizontale formant accoudoir pour les sièges latéraux ainsi rapprochés ;
- la figure 5 est une représentation semblable à celle de la figure 2 du seul siège milieu qui constitue l'essence de l'invention ;
- la figure 6 est une vue du siège milieu dans sa position selon la figure 2 ;
- la figure 7 est une vue du siège milieu dans sa position selon la figure 3 ;
- la figure 8 est une vue du siège milieu dans sa position selon la figure 4 et montre notamment l'accoudoir constitué par le capitonnage de la partie centrale du dossier du siège milieu ;
- la figure 9 est une vue du siège milieu dans la position de la figure 6 et montre notamment l'armature de la partie latérale du dossier du siège rabattu sur l'assise, tandis que l'armature de sa partie centrale est restée dans une position sensiblement verticale tout en étant réalisée en deux parties articulées dont la partie mobile est prévue pour constituer l'accoudoir ;
- la figure 10 est une vue du siège milieu dans la position de la figure 7 et montre l'ensemble du siège selon la figure 9 une fois rabattu sur le plancher du véhicule, seul le bâti du siège restant à sa position initiale ;
- la figure 11 est une vue du siège milieu dans la position de la figure 8 et montre l'armature du capitonnage de la partie centrale du dossier du siège dans sa position constituant l'accoudoir.

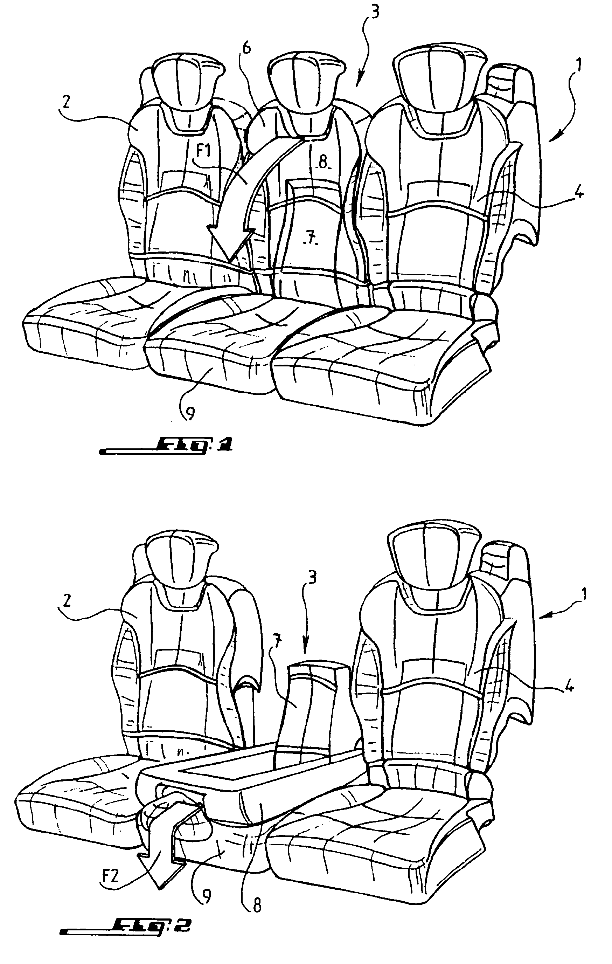

Aux figures 1 à 4 des dessins annexés, on a représenté de manière générale en 1 une disposition à trois sièges distincts 2, 3 et 4 à dossiers sensiblement verticaux, ces sièges étant montés sur un plancher non représenté tel que celui d'un véhicule automobile.

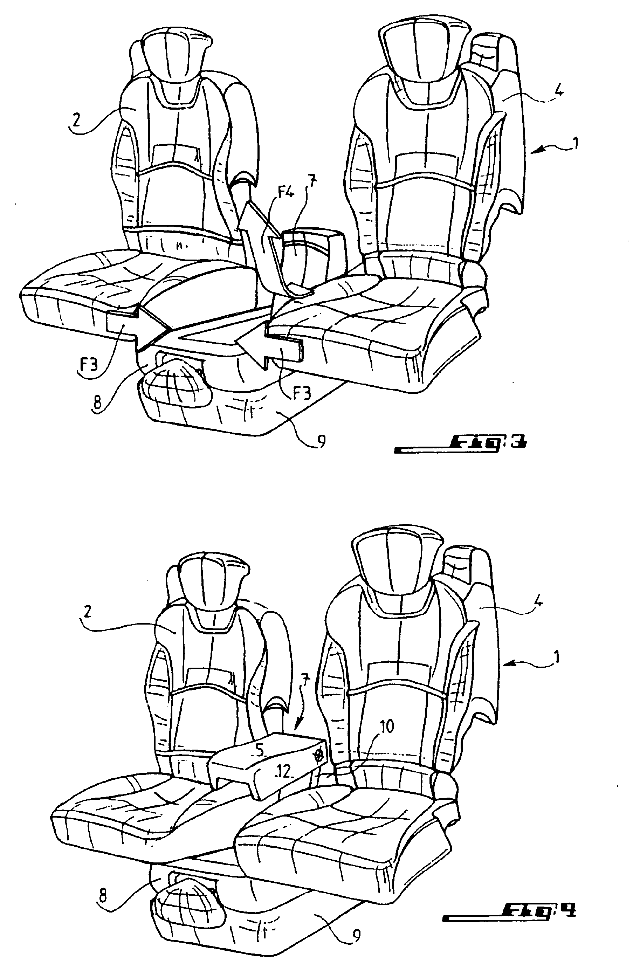

Ainsi, à la figure 1, les trois sièges 2, 3 et 4 sont dans leur position d'assise permettant à des passagers de s'asseoir aux places arrière d'un véhicule, tandis que les figures 2 à 4 montrent la transformation du siège milieu 3 pour finalement constituer, à la figure 4, un accoudoir 5 pour les passagers des sièges latéraux 2 et 4.

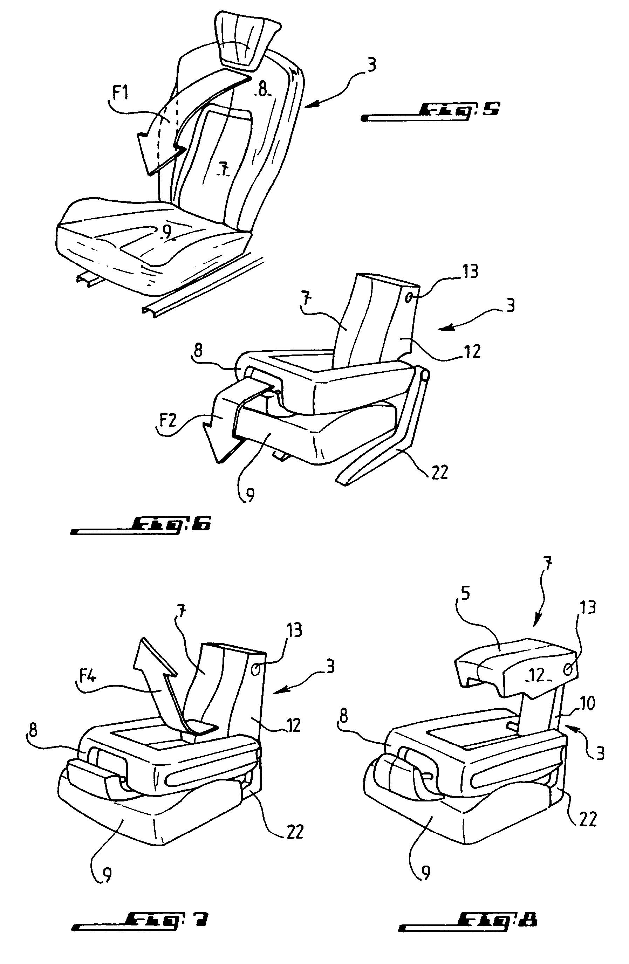

La transformation du siège milieu 3 pour donner l'accoudoir 5 est également montrée aux figures 5 à 8 qui représentent uniquement le siège milieu 3 et la cinématique de transformation de ce siège indiquée par les flèches référencées F1, F2, F3-F3 et F4, que l'on retrouve d'ailleurs également aux figures 1 à 4 ci-dessus.

Conformément à l'invention et comme cela ressort des dessins et notamment des figures 1 et 5, le dossier 6 du siège milieu 3 est réalisé en deux parties, à savoir une partie centrale 7 et une partie latérale en U inversé 8 entourant cette partie centrale et articulée à l'assise 9 du siège. Aux figures 2 et 6, cette partie latérale en U inversé 8 a été rabattue sur l'assise 9 du siège milieu 3 selon les flèches F1 des figures 1 et 5, tandis que la partie centrale 7 du dossier 6 est restée à la position sensiblement verticale qu'elle occupait à ces figures 1 et 5.

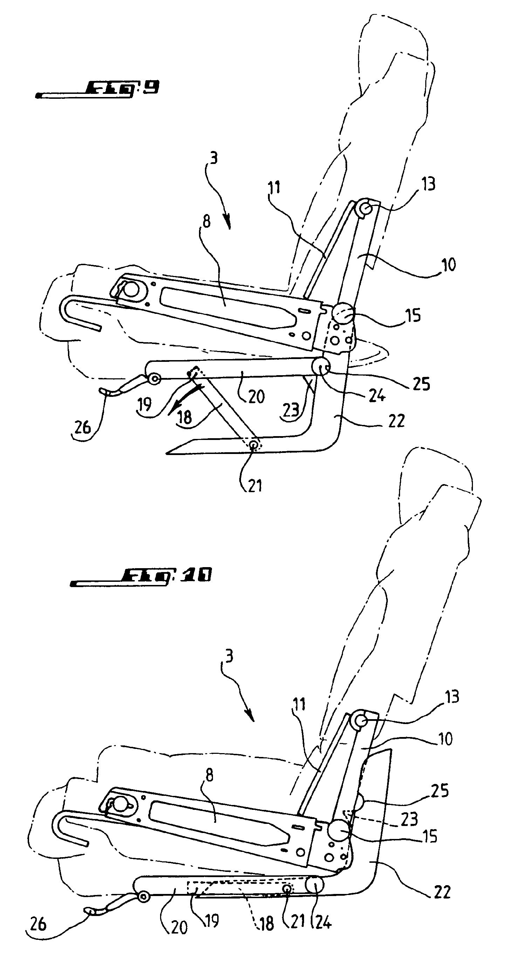

De même, comme on le voit bien aux figures 4 et 8 et comme cela ressort plus clairement des figures 9 à 11 dont il sera question de manière détaillée plus loin, la partie centrale 7 du siège milieu 3 comprend un support 10 solidaire de l'assise 9 et une armature 11 pour un capitonnage 12 articulé en 13 au support 10 en partie haute de celui-ci et devant former l'accoudoir 5 de la manière indiquée dans ce qui suit.

On va tout d'abord expliquer le passage de la disposition selon les figures 2 et 6 ci-dessus à celle des figures 3 et 7.

On amène ainsi l'ensemble constitué par la partie latérale 8 repliée sur l'assise 9 à reposer sur le plancher du véhicule selon la flèche F2 des figures 2 et 6 d'une manière connue et qui sera schématiquement expliquée en liaison avec les figures 9 et 10.

Puis on fait coulisser l'un vers l'autre les sièges latéraux 2, 4 selon les flèches F3-F3 de la figure 3 au-dessus de l'ensemble formé par la partie latérale 8 repliée sur l'assise 9 reposant sur le plancher du véhicule. Cette disposition de coulissement est d'un type connu et ne fait pas directement partie de l'invention.

De manière à permettre un tel coulissement des sièges latéraux au-dessus d'un tel ensemble, il y a cependant lieu de prévoir que la partie supérieure de cet ensemble, ou au moins une portion de celle-ci, se trouve au moment du coulissement en dessous de la partie inférieure des sièges latéraux. Il est en effet nécessaire qu'au moins la portion de cet ensemble au-dessus de laquelle viendra coulisser les sièges latéraux se trouve à une hauteur inférieure à celle de la partie inférieure des sièges latéraux.

Dans une dernière opération et pour obtenir la disposition finale selon les figures 4 et 8 et créer l'accoudoir 5, il suffit de faire pivoter le capitonnage 12 selon la flèche F4 des figures 3 et 7, après l'avoir déverrouillé de son support 10 pour l'amener dans une position sensiblement horizontale. On constate alors que l'accoudoir 5 ainsi réalisé est un accoudoir confortable pour les passagers des sièges latéraux car il est utilisé sur sa face garnie qui correspond en effet à la face garnie de la partie centrale 7 du dossier.

Dans la succession des opérations indiquées ci-dessus, le coulissement des sièges latéraux 2, 4 l'un vers l'autre se fait en les rapprochant d'une distance au plus égale à la largeur de la partie centrale 7 du dossier 6 du siège milieu.

Il est cependant possible d'amener la partie centrale 7 dans la position des figures 4 et 8 et de former l'accoudoir 5 avant de faire coulisser les sièges latéraux 2, 4 l'un vers l'autre.

Dans ce cas, le coulissement des sièges latéraux l'un vers l'autre se fait en les rapprochant d'une distance qui sera alors au plus égale à la largeur du support 10 de la partie centrale 7 du dossier du siège milieu.

On va maintenant montrer certains détails de réalisation en se référant aux figures 9 à 11 qui illustrent en traits pleins les diverses armatures de support du siège milieu et, en traits mixtes, la garniture de ce siège dans sa position d'assise.

La figure 9 montre ainsi le siège milieu 3 dont la partie latérale 8 du dossier a été rabattue sur l'assise autour d'un axe horizontal 15 situé en bas du dossier. En effet, avant d'être rabattue, cette partie latérale se trouve dans la position sensiblement verticale des figures 1 et 5 du fait d'un blocage de l'axe 15 soumis à l'action d'un organe de déblocage tel qu'une manette (non représentée mais d'un type connu) à la disposition des passagers pour ainsi amener cette partie latérale dans la position repliée.

A cette même figure 9, la partie centrale du siège milieu dont on voit le support 10 est solidaire de l'assise du siège et reste ainsi dans une position sensiblement verticale, tandis que l'armature 11 du capitonnage de cette partie centrale est articulée de manière débrayable au support 10. De manière à assurer une fixation du siège au bâti, un longeron pivotant 18 est relié d'une part en 19 au support 20 du siège et d'autre part en 21 à une jambe de force 22, formant le bâti du siège et également visible aux figures 6 à 8. Le support de siège 20 repose lui-même sur la jambe de force 22 par l'intermédiaire d'un ergot 23 et comprend en extrémité un galet 24 qui coopère avec un cran d'arrêt 35 de fixation au bâti.

Dans la position de la figure 9, lorsque la partie latérale 8 du dossier a été rabattue sur l'assise, l'utilisateur peut alors actionner un organe de déblocage du cran d'arrêt 25, tel qu'une manette 26, pour ouvrir ce cran d'arrêt et faire sortir le galet 24 de manière à libérer le support 20. L'ensemble ainsi constitué peut alors pivoter autour de l'axe 21 comme indiqué par une flèche au dessin pour prendre la forme montrée à la figure 10 en se posant sur le plancher du véhicule, seul le bâti restant à sa position initiale. Une telle disposition n'est pas montrée de manière plus détaillée car elle est connue pour un siège dont le dossier n'est cependant pas réalisé en deux parties, contrairement à la présente invention.

Bien que l'on ait prévu plus haut une première manette pour faire pivoter le dossier sur l'assise et une seconde manette pour ouvrir le cran d'arrêt permettant de descendre le siège, il est possible de ne prévoir qu'une seule manette effectuant ces deux opérations.

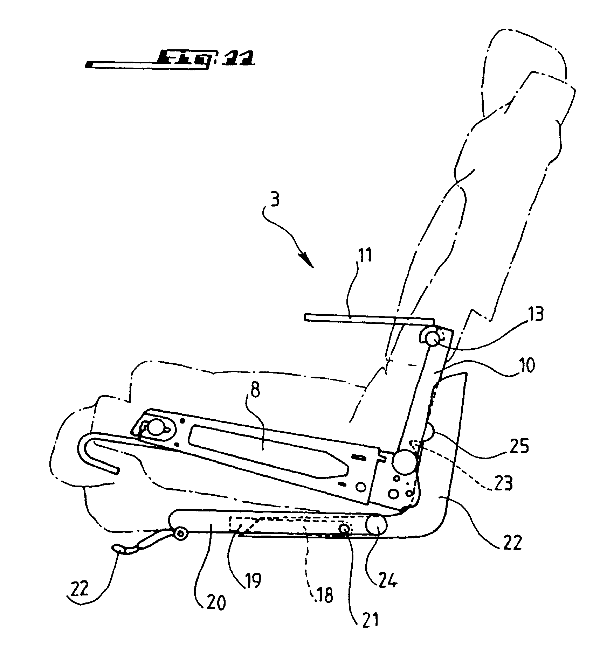

De manière à finalement obtenir la position représentée aux figures 4 et 8, il suffit de débrayer l'axe de rotation 13 de manière à amener l'armature 16 du capitonnage et donc le capitonnage 12 lui-même dans la position horizontale de la figure 11 afin de constituer l'accoudoir 5.

## Revendications

1. Procédé pour constituer un accoudoir (5) pour les sièges latéraux (2, 4) d'une disposition (1) à trois sièges (2, 3, 4) distincts à dossiers sensiblement verticaux, ces sièges étant montés sur un plancher tel que celui d'un véhicule automobile, **caractérisé par** les étapes consistant à :
- constituer en deux parties le dossier (6) du siège milieu (3) de la disposition (1) à trois sièges, à savoir une partie centrale (7) et une partie latérale en U inversé (8), cette partie centrale (7) comprenant elle-même un support (10) relié à l'assise (9) du siège et un capitonnage (12) articulé au support (10) en partie haute de celui-ci,
- déverrouiller et faire pivoter la partie latérale (8) du dossier (6) du siège milieu (3) par rapport à l'assise (9) de ce siège en laissant la partie centrale (7) de son dossier (6) en position sensiblement verticale,
- amener l'ensemble formé de ladite partie latérale (8) et de l'assise (9) du siège milieu (3) à reposer sur ledit plancher en laissant toujours la partie centrale (7) du dossier en position sensiblement verticale.
- faire coulisser les sièges latéraux (2,4) l'un vers l'autre,
- déverrouiller et faire pivoter le capitonnage (12) de la partie centrale (7) par rapport à son support (10) et le fixer en position sensiblement horizontale afin de constituer ledit accoudoir (5).

2. Procédé pour constituer un accoudoir (5) pour les sièges latéraux (2, 4) d'une disposition (1) à trois sièges (2, 3, 4) distincts à dossiers sensiblement verticaux, ces sièges étant montés sur un plancher, tel que celui d'un véhicule automobile, **caractérisé par** les étapes consistant à :
- constituer en deux parties le dossier (6) du siège milieu (3) de la disposition (1) à trois sièges, à savoir une partie centrale (7) et une partie latérale en U inversé (8), cette partie centrale (7) comprenant elle-même un support (10) relié à l'assise du siège et un capitonnage (12) articulé au support (10) en partie haute de celui-ci,
- déverrouiller et faire pivoter la partie latérale (8) du dossier (6) du siège milieu (3) par rapport à l'assise (9) de ce siège en laissant la partie centrale (7) de son dossier (6) en position sensiblement verticale,
- amener l'ensemble formé de ladite partie latérale (8) et de l'assise (9) du siège milieu (3) à reposer sur ledit plancher en laissant toujours la partie centrale (7) du dossier en position sensiblement verticale,
- déverrouiller et faire pivoter le capitonnage (12) de la partie centrale (7) par rapport à son support (10) et le fixer en position sensiblement horizontale afin de constituer ledit accoudoir (5),
- faire coulisser les sièges latéraux (2, 4) l'un vers l'autre.

3. Procédé selon l'une des revendications 1 ou 2, **caractérisé en ce que**, lorsqu'on amène l'ensemble formé de ladite partie latérale (8) et de l'assise (9) du siège milieu (3) à reposer sur le plancher, on fait en sorte qu'au moins une portion de la partie supérieure de cet ensemble se trouve à une hauteur inférieure à celle de la partie inférieure des sièges latéraux (2, 4) par rapport à ce plancher et **en ce que** le coulissement des sièges latéraux l'un vers l'autre se fait au-dessus de ladite portion dudit ensemble.

4. Procédé selon l'une des revendications 1 ou 3, **caractérisé en ce que** le coulissement des sièges latéraux l'un vers l'autre se fait en les rapprochant d'une distance au plus égale à la largeur de la partie centrale (7) du dossier (6) du siège milieu (3).

5. Procédé selon l'une des revendications 2 ou 3, **caractérisé en ce que** le coulissement des sièges latéraux l'un vers l'autre se fait en les rapprochant d'une distance au plus égale à la largeur du support (10) de la partie centrale (7) du dossier du siège milieu (3).

6. Dispositif pour constituer un accoudoir (5) pour les sièges latéraux (2, 4) d'une disposition (1) à trois sièges (2, 3, 4) distincts à dossiers sensiblement verticaux, ces sièges étant montés sur un plancher, tel que celui d'un véhicule automobile, et les sièges latéraux (2, 4) étant prévus pour coulisser l'un vers l'autre, **caractérisé en ce que** le dossier (6) du siège milieu (3) est réalisé en deux parties, à savoir une partie centrale (7) et une partie latérale en U inversé (8), la partie centrale (7) du dossier est fixe par rapport à l'assise (9) du siège et la partie latérale en U inversé (8) du dossier est articulée sur l'assise (9) du siège au moyen d'un axe de rotation horizontal (15) situé en bas du dossier en étant maintenu en position sensiblement verticale à l'aide d'un premier organe de blocage monté débrayable de manière à pouvoir rabattre la partie latérale en U inversé (8) du dossier (6) sur l'assise (9) du siège, le capitonnage (12) de la partie centrale (7) du dossier est lui-même articulé sur son support (10) au moyen d'un axe de rotation horizontal (13) placé à la partie supérieure du support (10) et est maintenu contre le support à l'aide d'un second organe de blocage également débrayable de manière à pouvoir amener le capitonnage (12) en une position sensiblement horizontale.

7. Dispositif selon la revendication 6, **caractérisé en ce que** le premier et le second organes de blocage débrayables sont chacun reliés à un organe de déblocage.

8. Dispositif selon l'une des revendications 6 ou 7, **caractérisé en ce que** l'ensemble constitué par l'assise (9) et le dossier (6) du siège milieu (3) est fixé au bâti du siège par un cran d'arrêt (25).

9. Dispositif selon la revendication 8, **caractérisé en ce qu'**un longeron pivotant (18) est relié d'une part au support (20) du siège et d'autre part à une jambe de force (22) du bâti de ce siège et sur laquelle repose (en 23) le support de siège (20), ledit support de siège comprenant en extrémité un organe de maintien (24) qui coopère avec le cran d'arrêt (25).

10. Dispositif selon l'une des revendication 8 et 9, **caractérisé en ce qu'**un organe de déblocage du cran d'arrêt (25) est prévu sur le bâti du siège (3) pour permettre audit ensemble de pivoter autour d'un axe et se poser sur le plancher du véhicule, le bâti restant à sa position initiale.

11. Dispositif selon l'une des revendications 7 à 10, **caractérisé en ce que** les organes de déblocage sont constitués par au moins une mannette (26) à la disposition des passagers des sièges latéraux.

## Claims

1. A method for forming an armrest (5) for the lateral seats (2, 4) of an arrangement (1) having three distinct seats (2, 3, 4) with substantially vertical backs, these seats being mounted on a floor such as that of a motor vehicle, **characterized by** the steps consisting in:
- forming in two parts the back (6) of the middle seat (3) of the three-seat arrangement (1), namely a central part (7) and a lateral part of inverted U-shape (8), this central part (7) itself comprising a support (10) connected to the seating portion (9) of the seat and a cushioning (12) articulated to the support (10) at the top part thereof,
- unlocking and pivoting the lateral part (8) of the back (6) of the middle seat (3) with respect to the seating portion (9) of this seat, leaving the central part (7) of its back (6) in a substantially vertical position,
- bringing the assembly formed of the said lateral part (8) and of the seating portion (9) of the middle seat (3) to rest on the said floor, still leaving the central part (7) of the back in a substantially vertical position,
- sliding the lateral seats (2, 4) towards each other,
- unlocking and pivoting the cushioning (12) of the central part (7) with respect to its support (10) and fixing it in a substantially horizontal position so as to form the said armrest (5).

2. A method for forming an armrest (5) for the lateral seats (2, 4) of an arrangement (1) having three distinct seats (2, 3, 4) with substantially vertical backs, these seats being mounted on a floor such as that of a motor vehicle, **characterized by** the steps consisting in:
- forming in two parts the back (6) of the middle seat (3) of the three-seat arrangement (1), namely a central part (7) and a lateral part of inverted U-shape (8), this central part (7) itself comprising a support (10) connected to the seating portion of the seat and a cushioning (12) articulated to the support (10) at the top part thereof,
- unlocking and pivoting the lateral part (8) of the back (6) of the middle seat (3) with respect to the seating portion (9) of this seat, leaving the central part (7) of its back (6) in a substantially vertical position,
- bringing the assembly formed of the said lateral part (8) and of the seating portion (9) of the middle seat (3) to rest on the said floor, still leaving the central part (7) of the back in a substantially vertical position,
- unlocking and pivoting the cushioning (12) of the central part (7) with respect to its support (10) and fixing it in a substantially horizontal position so as to constitute the said armrest (5),
- sliding the lateral seats (2, 4) towards each other.

3. The method according to one of Claims 1 or 2, **characterized in that**, when the assembly formed of the said lateral part (8) and of the seating portion (9) of the middle seat (3) is brought to rest on the floor, one proceeds such that at least a portion of the upper part of this assembly is situated at a lower height than that of the lower part of the lateral seats (2, 4) with respect to this floor and **in that** the sliding of the lateral seats towards each other is carried out above the said portion of the said assembly.

4. The method according to one of Claims 1 or 3, **characterized in that** the sliding of the lateral seats towards each other is carried out by bringing them close by a distance at least equal to the width of the central part (7) of the back (6) of the middle seat (3).

5. The method according to one of Claims 2 or 3, **characterized in that** the sliding of the lateral seats towards each other is carried out by bringing them close by a distance at least equal to the width of the support (10) of the central part (7) of the back of the middle seat (3).

6. A device for forming an armrest (5) for the lateral seats (2, 4) of an arrangement (1) having three distinct seats (2, 3, 4) with substantially vertical backs, these seats being mounted on a floor, such as that of a motor vehicle, and the lateral seats (2, 4) being provided to slide towards each other, **characterized in that** the back (6) of the middle seat (3) is realized in two parts, namely a central part (7) and a lateral part of inverted U-shape (8), the central part (7) of the back is fixed with respect to the seating portion (9) of the seat and the lateral part of inverted U-shape (8) of the back is articulated on the seating portion (9) of the seat by means of a horizontal rotation axis (15) situated at the bottom of the back, being held in substantially vertical position with the aid of a first locking member, disengageably mounted so as to be able to fold down the lateral part of inverted U-shape (8) of the back (6) on the seating portion (9) of the seat, the cushioning (12) of the central part (7) of the back is itself articulated on its support (10) by means of a horizontal rotation axis (13) placed at the upper part of the support (10) and is held against the support with the aid of a second locking member, likewise disengageable so as to be able to bring the cushioning (12) into a substantially horizontal position.

7. The device according to Claim 6, **characterized in that** the first and the second disengageable locking members are each connected to an unlocking member.

8. The device according to one of Claims 6 or 7, **characterized in that** the assembly constituted by the seating portion (9) and the back (6) of the middle seat (3) is fixed to the frame of the seat by an arresting notch (25).

9. The device according to Claim 8, **characterized in that** a pivoting side member (18) is connected on the one hand to the support (20) of the seat and on the other hand to a strut (22) of the frame of this seat and on which (at 23) the seat support (20) rests, the said seat support comprising at the end a holding member (24) which cooperates with the arresting notch (25).

10. The device according to one of Claims 8 and 9, **characterized in that** an unlocking member of the arresting notch (25) is provided on the frame of the seat (3) to permit the said assembly to pivot about an axis and to be placed on the floor of the vehicle, with the frame remaining in its initial position.

11. The device according to one of Claims 7 to 10, **characterized in that** the unlocking members are constituted by at least one operating lever (26) at the disposal of the passengers of the lateral seats.

## Patentansprüche

1. Verfahren zum Bilden einer Armlehne (5) für die seitlichen Sitze (2, 4) einer Anordnung (1) zu drei getrennten Sitzen (2, 3, 4) mit im Wesentlichen vertikalen Rückenlehnen, wobei diese Sitze auf einen Fußboden, wie zum Beispiel auf den eines Kraftfahrzeugs montiert sind, **gekennzeichnet durch** die Schritte, die aus Folgendem bestehen:
- Bilden aus zwei Teilen der Rückenlehne (6) des mittleren Sitzes (3) der Anordnung (1) zu drei Sitzen, nämlich ein zentraler Teil (7) und ein seitlicher Teil in umgekehrtem U (8), wobei dieser zentrale Teil (7) selbst einen Träger (10) aufweist, der mit der Sitzfläche (9) des Sitzes verbunden ist, und eine Polsterung (12) aufweist, die an dem Träger (10) in dessen oberem Teil angelenkt ist,
- Entriegeln und Schwenken des seitlichen Teils (8) der Rückenlehne (6) des mittleren Sitzes (3) in Bezug zu der Sitzfläche (9) dieses Sitzes, wobei der zentrale Teil (7) seiner Rückenlehne (6) in im Wesentlichen vertikaler Position gelassen wird,
- die aus dem seitlichen Teil (8) und der Sitzfläche (9) des mittleren Sitzes (3) gebildete Einheit zum Aufliegen auf dem Fußboden bringen, indem der zentrale Teil (7) der Rückenlehne immer noch in im Wesentlichen vertikaler Position gelassen wird,
- die seitlichen Sitze (2, 4) zueinander schieben,
- Entriegeln und Schwenken der Polsterung (12) des zentralen Teils (7) in Bezug zu ihrem Träger (10) und Befestigen dieser in im Wesentlichen horizontaler Position, um die Armlehne (5) zu bilden.

2. Verfahren zum Bilden einer Armlehne (5) für die seitlichen Sitze (2, 4) einer Anordnung (1) zu drei getrennten Sitzen (2, 3, 4) mit im Wesentlichen vertikalen Rückenlehnen, wobei diese Sitze auf einen Fußboden montiert sind, wie zum Beispiel auf den eines Kraftfahrzeugs, **gekennzeichnet durch** die Schritte, die aus Folgendem bestehen:
- Bilden der Rückenlehne (6) des mittleren Sitzes (3) der Anordnung (1) zu drei Sitzen aus zwei Teilen, nämlich aus einem zentralen Teil (7) und aus einem seitlichen Teil in umgekehrtem U (8), wobei dieser zentrale Teil (7) selbst einen Träger (10) aufweist, der mit der Sitzfläche des Sitzes verbunden ist, und eine Polsterung (12), die an dem Träger (10) in dessen oberem Teil angelenkt ist,
- Entriegeln und Schwenken des seitlichen Teils (8) der Rückenlehne (6) des mittleren Sitzes (3) in Bezug zu der Sitzfläche (9) dieses Sitzes, indem der zentrale Teil (7) seiner Rückenlehne (6) in im Wesentlichen vertikaler Position gelassen wird,
- die aus dem seitlichen Teil (8) und der Sitzfläche (9) des mittleren Sitzes (3) gebildete Einheit zum Aufliegen auf dem Fußboden bringen, indem der zentrale Teil (7) der Rückenlehne immer noch in im Wesentlichen vertikaler Position gelassen wird,
- Entriegeln und Schwenken der Polsterung (12) des zentralen Teils (7) in Bezug zu ihrem Träger (10) und sie in im Wesentlichen horizontaler Position befestigen, um die Armlehne (5) zu bilden,
- Schieben der seitlichen Sitze (2, 4) zueinander.

3. Verfahren nach einem der Ansprüche 1 oder 2, **dadurch gekennzeichnet, dass**, wenn man die aus dem seitlichen Teil (8) und der Sitzfläche (9) des mittleren Sitzes (3) gebildete Einheit zum Aufliegen auf dem Fußboden bringt, man derart vorgeht, dass sich mindestens ein Abschnitt des oberen Teils dieser Einheit auf einer Höhe befindet, die kleiner ist als die des unteren Teils der seitlichen Sitze (2, 4) in Bezug zu diesem Fußboden, und dass das Schieben der seitlichen Sitze zueinander oberhalb des Abschnitts der Einheit erfolgt.

4. Verfahren nach einem der Ansprüche 1 oder 3, **dadurch gekennzeichnet, dass** das Schieben der seitlichen Sitze zueinander erfolgt, indem sie um eine Entfernung angenähert werden, die höchstens gleich der Breite des zentralen Teils (7) der Rückenlehne (6) des mittleren Sitzes (3) ist.

5. Verfahren nach einem der Ansprüche 2 oder 3, **dadurch gekennzeichnet, dass** das Schieben der seitlichen Sitze zueinander erfolgt, indem sie um eine Entfernung angenähert werden, die höchstens gleich der Breite des Trägers (10) des zentralen Teils (7) der Rückenlehne des mittleren Sitzes (3) ist.

6. Vorrichtung zum Bilden einer Armlehne (5) für die seitlichen Sitze (2, 4) einer Anordnung (1) zu drei getrennten Sitzen (2, 3, 4) mit im Wesentlichen vertikalen Rückenlehnen, wobei diese Sitze auf einen Fußboden montiert sind, zum Beispiel auf den eines Kraftfahrzeugs, und wobei die seitlichen Sitze (2, 4) vorgesehen sind, um zueinander zu gleiten, **dadurch gekennzeichnet, dass** die Rückenlehne (6) des mittleren Sitzes (3) aus zwei Teilen hergestellt ist, nämlich aus einem zentralen Teil (7) und aus einem seitlichen Teil in umgekehrtem U (8), wobei der zentrale Teil (7) der Rückenlehne in Bezug zu der Sitzfläche (9) des Sitzes stationär ist, und der seitliche Teil in umgekehrtem U (8) der Rückenlehne auf der Sitzfläche (9) des Sitzes mittels einer horizontalen Drehachse (15) angelenkt ist, die sich an der Unterseite der Rückenlehne befindet und mit Hilfe eines ersten Blockierorgans in im Wesentlichen horizontaler Position gehalten wird, das derart ausgekoppelt werden kann, dass man den seitlichen Teil in umgekehrtem U (8) der Rückenlehne (6) auf die Sitzfläche (9) des Sitzes klappen kann, wobei die Polsterung (12) des zentralen Teils (7) der Rückenlehne selbst auf ihrem Träger (10) mittels einer horizontalen Drehachse (13) angelenkt ist, die in dem oberen Teil des Trägers (10) angeordnet ist und gegen den Träger mit Hilfe eines zweiten Blockierungsorgans gehalten wird, das ebenfalls derart auskoppelbar ist, dass man die Polsterung (12) in eine im Wesentlichen horizontale Position bringen kann.

7. Vorrichtung nach Anspruch 6, **dadurch gekennzeichnet, dass** das erste und das zweite auskoppelbare Blockierorgan jeweils mit einem Entriegelungsorgan verbunden sind.

8. Vorrichtung nach einem der Ansprüche 6 oder 7, **dadurch gekennzeichnet, dass** die Einheit, die aus der Sitzfläche (9) und der Rückenlehne (6) des mittleren Sitzes (3) besteht, an dem Aufbau des Sitzes mit einer Sperrklinke (25) befestigt ist.

9. Vorrichtung nach Anspruch 8, **dadurch gekennzeichnet, dass** ein schwenkender Längsträger (18) einerseits mit dem Träger (20) des Sitzes und andererseits mit einer Schubstrebe (22) des Aufbaus dieses Sitzes verbunden ist und der (in 23) auf dem Sitzträger (20) ruht, wobei der Sitzträger am Ende ein Halteorgan (24) aufweist, das mit der Sperrklinke (25) zusammenwirkt.

10. Vorrichtung nach einem der Ansprüche 8 und 9, **dadurch gekennzeichnet, dass** ein Entriegelungsorgan der Sperrklinke (25) auf dem Aufbau des Sitzes (3) vorgesehen ist, um es der Einheit zu erlauben, um eine Achse zu schwenken und sich auf den Fußboden des Fahrzeugs zu legen, wobei der Aufbau in seiner ursprünglichen Position bleibt.

11. Vorrichtung nach einem der Ansprüche 7 bis 10, **dadurch gekennzeichnet, dass** die Entriegelungsorgane aus mindestens einem Bedienungshebel (26) bestehen, der den Insassen der seitlichen Sitze zur Verfügung steht.
